# EUROPÄISCHE PATENTSCHRIFT

(11) **EP 2 564 041 B1**
(45) Veröffentlichungstag und Bekanntmachung des Hinweises auf die Patenterteilung: **27.01.2016**
(21) Anmeldenummer: 11717227.0
(22) Anmeldetag: 21.04.2011
(51) Int. Cl.: F01N 3/20, F02M 63/00

(54) **VORRICHTUNG ZUR FÖRDERUNG VON REDUKTIONSMITTEL**
DEVICE FOR DELIVER REDUCING AGENT
DISPOSITIF POUR LE REFOULEMENT D'AGENT RÉDUCTEUR

(30) Priorität: 28.04.2010 DE 102010018613
(43) Veröffentlichungstag der Anmeldung: 06.03.2013
(73) Patentinhaber: Continental Automotive GmbH, 30165 Hannover (DE)
(72) Erfinder: MAUS, Wolfgang, 51429 Bergisch Gladbach (DE); WIERES, Ludwig, 51491 Overath (DE); BRÜCK, Rolf, 51429 Bergisch Gladbach (DE); HIRTH, Peter, 51503 Rösrath (DE); HODGSON, Jan, 53840 Troisdorf (DE)
(86) Internationale Anmeldenummer: PCT/EP2011/056433
(87) Internationale Veröffentlichungsnummer: WO 2011/134893

(56) Entgegenhaltungen:
- EP-A1- 1 030 052
- WO-A1-2009/112294
- DE-A1- 19 947 198

## Beschreibung

Die Erfindung betrifft eine Vorrichtung zur Förderung von Reduktionsmittel aus einem Tank zu einer Zugabeeinheit. Derartige Fördervorrichtungen werden vermehrt insbesondere bei mobilen Verbrennungskraftmaschinen dazu eingesetzt, Reduktionsmittel in eine Abgasbehandlungsvorrichtung zu fördern.

Zur Reinigung der Abgase von Verbrennungskraftmaschinen werden Abgasbehandlungsvorrichtungen eingesetzt, bei denen ein Reduktionsmittel in die Abgasleitung eingedüst wird. In derartigen Abgasbehandlungsvorrichtungen findet eine Reinigung der Abgase durch Umsetzung von Schadstoffbestandteilen des Abgases mit dem zugeführten Reduktionsmittel statt. Ein besonders häufig eingesetztes Verfahren ist das Verfahren der selektiven katalytischen Reduktion (selective catalytic reduction = SCR). Bei diesem Verfahren werden Stickoxidanteile im Abgas mit dem Reduktionsmittel zu unschädlichen Komponenten wie Stickstoff, Wasser und Kohlendioxid umgesetzt. Als Reduktionsmittel hierfür wird Ammoniak bevorzugt verwendet.

Ammoniak wird insbesondere bei mobilen Verbrennungskraftmaschinen nicht direkt bevorratet, sondern in Form eines Reduktionsmittelvorläufers. Ein derartiger Reduktionsmittelvorläufer kann beispielsweise Harnstoff und insbesondere eine Harnstoff-Wasser-Lösung sein. Eine Harnstoff-Wasser-Lösung mit einem Harnstoffgehalt von 32,5 % ist unter dem Handelsnamen AdBlue bereits verbreitet.

Um den Reduktionsmittelvorläufer aus einem dafür vorgesehenen Tank in eine Abgasbehandlungsvorrichtung zu fördern, ist regelmäßig eine Fördervorrichtung erforderlich. Fördervorrichtungen mit pulsativ arbeitenden Förderpumpen, wie beispielsweise Kolbenpumpen oder Membranpumpen, haben sich aus Zuverlässigkeitserwägungen und/oder Kostengründen durchgesetzt. Nachteilig bei pulsativ (also insbesondere intermittierend bzw. hubweise fördernd) arbeitenden Förderpumpen ist, dass diese ein Fördergeräusch erzeugen. Für den Komfort eines Kraftfahrzeuges ist es jedoch gewünscht, dass die Förderung des Reduktionsmittels besonders geräuscharm erfolgt.

Darüber hinaus ist eine hohe Dosiergenauigkeit des zugeführten Reduktionsmittels in die Abgasbehandlungsvorrichtung gewünscht. Dies ist zum einen der Fall, weil zur Umsetzung der Schadstoffbestandteile im Abgas genau eine vorgegebene Menge an Reduktionsmittel in die Abgasbehandlungsvorrichtung zugeführt werden soll, und zum anderen, weil während des Betriebes der Abgasbehandlungsvorrichtung der Verbrauch an Reduktionsmittel möglichst gering sein soll. Der Verbrauch an zugeführtem Reduktionsmittel stellt einen Kostenfaktor für den Betrieb des Kraftfahrzeuges dar. Darüber hinaus stellt das Reduktionsmittel einen zusätzlichen Betriebsstoff dar, den der Benutzer eines Kraftfahrzeuges gesondert nachtanken muss. Es ist vielfach Bestrebung der Hersteller von Kraftfahrzeugen, den Reduktionsmittelvorrat in einem Kraftfahrzeug so zu dimensionieren, dass dieser für das gesamte Betriebsintervall des Kraftfahrzeuges zwischen zwei Werkstattintervallen ausreicht. Dann wird der Benutzer des Kraftfahrzeuges durch das Nachfüllen des Vorrates an Reduktionsmittel im Kraftfahrzeug nicht belastet.

DE 199 47 198 A1 offenbart eine Vorrichtung zum Nachbehandeln von Abgasen einer Brennkraftmaschine unter Verwendung eines in die Abgase einzubringenden Reduktionsmittels, mit einer Mischkammer, in welcher ein Reduktionsmittel-Luft-Gemisch erzeugt wird.

EP 1 030 052 A1 offenbart ein Hochdruckeinspritzsytem zur Einspritzung von Kraftstoff in die Brennräumen einer Brennkraftmaschine,wobei für jeden Brennraum Injektoren vorgesehen sind.

WO 2009/112294 A1 offenbart eine Vorrichtung zur Dosierung mindestens eines schadstoffvermindernden Mediums in ein Abgassystem. Insbesondere wird vorgeschlagen Kraftstoff in einen Abgasstrang, einzubringen,

Hiervon ausgehend ist es Aufgabe der hier vorliegenden Erfindung, die im Zusammenhang mit dem Stand der Technik geschilderten technischen Probleme zumindest teilweise zu lösen. Es sollen insbesondere eine besonders kostengünstige, geräuscharme und/oder dosiergenaue Vorrichtung zur Förderung von Reduktionsmittel vorgestellt werden. Dabei soll insbesondere eine von dem Pumpenmodell relativ unabhängige Lösung zur Reduzierung von Geräuschen über die Förderleitungen des Reduktionsmittels angegeben werden, die also für eine Mehrzahl verschiedener Pumpenmodelle gleichermaßen einfach und kostengünstig angewendet werden kann.

Diese Aufgaben werden gelöst mit einer Vorrichtung gemäß den Merkmalen des Patentanspruches 1. Weitere vorteilhafte Ausgestaltungen der Vorrichtung sind in den abhängig formulierten Patentansprüchen angegeben. Die in den Patentansprüchen einzeln aufgeführten Merkmale sind in beliebiger, technologisch sinnvoller, Weise miteinander kombinierbar und können durch erläuternde Sachverhalte aus der Beschreibung ergänzt werden, wobei weitere Ausführungsvarianten der Erfindung aufgezeigt werden.

Erfindungsgemäß ist eine Vorrichtung zur Förderung von Reduktionsmittel aus einem Tank zu einer Zugabeeinheit aufweisend eine pulsativ arbeitende Förderpumpe zur Förderung von Reduktionsmittel mit einer Förderrichtung durch eine Förderleitung von dem Tank zu der Zugabeeinheit, wobei die Förderleitung in Förderrichtung hinter der Förderpumpe bereichsweise zumindest zwei getrennte Kanäle aufweist, und die Kanäle Strömungswege mit unterschiedlichen Laufzeiten für das Reduktionsmittel ausbilden.

Mit dem Begriff "Reduktionsmittel" ist hier insbesondere auch ein Reduktionsmittelvorläufer bzw. eine Reduktionsmittelvorläuferlösung umfasst.

Die "pulsative" arbeitende Förderpumpe ist vorzugsweise eine Membranpumpe oder eine Kolbenpumpe, bei welcher ein beweglicher Förderkolben die zur Förderung erforderliche Energie aufbringt und die Förderrichtung der Pumpe durch entsprechende Ventile vorgegeben wird. Damit wird mittels der Förderpumpe die zu fördernde Menge des Reduktionsmittels mit mehreren (kleineren) Teilmengen bewegt, die sich an dem Hubvolumen bzw. der Einzel-Fördermenge der Membran bzw. des Kolbens orientiert. Dies führt dazu, dass die Förderpumpe mit einer Taktrate eine Mehrzahl bzw. Vielzahl solcher Arbeitsschritte ausführt und die Förderpumpe pulsweise, insbesondere schnell intermittierend, Reduktionsmittel in die Förderleitung einströmen lässt.

Die Förderleitung ist eine vorzugsweise starre Leitung, z. B. aus Metall und/oder Kunststoff. Die Förderleitung kann auch bereichsweise starr und bereichsweise flexibel sein. Innerhalb der Förderleitung bzw. mit der Förderleitung kann sich nunmehr der Druckimpuls, der über das pulsierend zugegebene Fördermittel eingeleitet wird, und/oder der Körperschall ausweiten und an verschiedenen Stellen eine Quelle für Geräusche bilden. Insbesondere zur Reduzierung der eingeleiteten Druckimpulse über das pulsierende Zugeben des Reduktionsmittel wird nun mit der Bereitstellung von bereichsweise getrennten Kanälen erreicht, wobei die dort (gleichzeitig) hindurch strömenden Teilmengen des Reduktionsmittels beim Zusammenkommen den Druckimpuls selbst zumindest teilweise abbauen.

Die zumindest zwei getrennten Kanäle können auch eine Vielzahl von Kanälen unterschiedlicher Länge sein. Beispielsweise können mehr als 3, vorzugsweise mehr als 5 und insbesondere auch mehr als 10 verschiedene getrennte Kanäle ausgebildet sein. Mit "Strömungswegen" sind hier insbesondere von dem Tank bzw. der Förderpumpe zu der Zugabeeinheit im Wesentlichen parallel verlaufende Strömungswege durch die Kanäle gemeint.

Unter einer "Laufzeit" wird die Zeit verstanden, die ein Druckimpuls des Reduktionsmittels benötigt, sich den jeweiligen Strömungsweg entlang durch die Kanäle fortzubewegen (z. B. bei der für den Betrieb geeigneten bzw. vorgegebenen Förderrate der Förderpumpe). Folglich wird ein Strom des Reduktionsmittels an einer ersten Stelle aufgeteilt in die getrennten Kanäle und nachfolgend wieder zusammengeführt, wobei ein Teilstrom eine längere Zeit von einem anderen Teilstrom getrennt ist (bzw. verzögert wird), und folglich bei der Zusammenführung die (zuvor gleichen) Druckimpulse nunmehr (zeitlich) versetzt sind. Damit wird die Intensität des Druckimpulses reduziert und damit auch die Geräuschentwicklung.

Besonders vorteilhaft ist die Vorrichtung, wenn in Förderrichtung nach der Förderpumpe und vor den zumindest zwei getrennten Kanälen ein gemeinsamer Pumpenauslaufkanal existiert, aus dem die zumindest zwei getrennten Kanäle abzweigen, und in Förderrichtung hinter den zumindest zwei getrennten Kanälen und vor der Zugabeeinheit ein gemeinsamer Sammelkanal existiert, in welchen die zumindest zwei getrennten Kanäle münden. Vorzugsweise entspricht der Gesamtquerschnitt der zumindest zwei getrennten Kanäle dem Querschnitt des Pumpenauslaufkanals und des gemeinsamen Sammelkanals. Folglich wird hier insbesondere vorgeschlagen, dass eine gemeinsame Abtrennung und/oder Sammelung der Teilströme vorgesehen ist, um den technischen Aufwand möglichst gering zu halten. Für eine Adaption eines solchen Kanalsystems an viele unterschiedliche Pumpenmodelle kann es jedoch auch sinnvoll sein, dass zumindest ein Teil der Kanäle an verschiedenen Stellen der Förderleitung (versetzt zueinander) abzweigen und/oder zusammenlaufen.

Weiterhin wird als vorteilhaft angesehen, dass die zumindest zwei getrennten Kanäle so gestaltet sind, dass die verschiedenen Laufzeiten der Strömungswege dazu geeignet sind, von der Förderpumpe erzeugte Druckschwankungen zumindest teilweise durch Interferenz auszugleichen. Die pulsativ arbeitende Förderpumpe erzeugt typischerweise einen Förderstrom an Reduktionsmittel, welcher pulsiert (signifikante Druckschwankungen aufweist). Durch die zumindest zwei getrennten Kanäle wird der gemeinsame Förderstrom der Förderpumpe in zumindest zwei einzelne Teilströme aufgeteilt. Durch die unterschiedlichen Laufzeiten der Strömungswege für das Reduktionsmittel durch die einzelnen Kanäle wird die Phase der von der Pumpe erzeugten pulsativen Strömung in den einzelnen Kanälen zueinander verschoben. Wenn nun die einzelnen Kanäle in einem gemeinsamen Sammelkanal wieder zueinander zusammengeführt werden, können sich die verschiedenen Pulsationswellen der Teilströme aus den verschiedenen Kanälen zumindest teilweise gegenseitig auslöschen. Hierbei wird insbesondere eine (zumindest teilweise) destruktive Interferenz der sich in der Förderleitung transversal fortpflanzenden Druckwellen, die von der pulsativ arbeitenden Förderpumpe eingeleitet werden, erreicht.

Besonders bevorzugt ist eine Vorrichtung, bei der die zumindest zwei getrennten Kanäle Strömungswege mit verschiedenen Längen ausbilden. So können unterschiedliche Laufzeiten der Strömungswege für das Reduktionsmittel verwirklicht werden.

Dies ist jedoch nur ein möglicher Weg unterschiedliche Laufzeiten durch die getrennten Kanäle zu realisieren. Alternativ oder zusätzlich können die verschiedenen Kanäle zumindest bereichsweise und/oder zumindest teilweise Mittel zur Strömungsbeschleunigung und/oder Mittel zur Strömungsabbremsung aufweisen. Mittel zur Strömungsabbremsung können beispielsweise Querschnittserweiterungen in einem Kanal sein. Mittel zur Strömungsbeschleunigung können beispielsweise Querschnittsverengungen in einem Kanal sein.

Weiterhin vorteilhaft ist die Vorrichtung, wenn die Förderleitung von einem internen Leitungsabschnitt in der Vorrichtung und von einem externen Leitungsabschnitt außerhalb der Vorrichtung gebildet ist und die zumindest zwei getrennten Kanäle Bestandteil des internen Leitungsabschnittes sind. Die Vorrichtung ist normalerweise nach Art eines, in einem Gehäuse gekapselten Moduls aufgebaut. An dieses Modul kann eine angepasst lange Förderleitung angeschlossen werden, durch welche der Transport des Reduktionsmittels von der Vorrichtung zu der Zugabeeinheit erfolgt. Für verschiedene Kraftfahrzeugtypen ist die Vorrichtung vorzugsweise immer gleich ausgeführt, während in Abhängigkeit von der Einbauposition der Vorrichtung und des Tankes im Kraftfahrzeug die Länge der Förderleitung variabel gewählt werden kann. Ein Bereich der Förderleitung ist allerdings auch in diesem Falle bereits innerhalb der Vorrichtung in Förderrichtung unmittelbar hinter der Förderpumpe angeordnet. Es existiert an der Vorrichtung ein Leitungsanschluss, an welchen eine Reduktionsmittelleitung z. B. mit Hilfe einer Kupplung angeschlossen werden kann. Der innerhalb der Vorrichtung angeordnete Abschnitt der Förderleitung wird hier als interner Leitungsabschnitt bezeichnet, während der in der angeschlossenen Transportleitung gebildete Abschnitt der Förderleitung als externer Leitungsabschnitt bezeichnet wird. Es ist besonders vorteilhaft, wenn die zumindest zwei getrennten Kanäle innerhalb des internen Leitungsabschnittes ausgebildet sind, weil so bereits frühzeitig Geräuschentwicklungen vermieden werden.

Gemäß einer Weiterbildung der Vorrichtung ist auch vorgesehen, dass die Förderleitung von einem internen Leitungsabschnitt in der Vorrichtung und von einem externen Leitungsabschnitt außerhalb der Vorrichtung gebildet ist, und der externe Leitungsabschnitt zumindest teilweise von einem Rohr aus Hartkunststoff oder Metall gebildet ist. Hartkunststoff kann beispielsweise Polypropylen (PP), Polyethylen (PE), insbesondere hochdichtes Polyethylen (HD-PE = high density PE), Polyamid (PA) oder Polyethylenterephthalat (PTFE) sein. Als Metalle können für das Rohr beispielsweise Aluminium oder Stahl, insbesondere Edelstahl, verwendet werden. Leitungen aus Hartkunststoff und Leitungen aus Metall sind im Wesentlichen starr.

Derartige Rohre sind daher in der Lage, Reduktionsmittel auch über weite Distanzen im Wesentlichen ohne Druckverlust zu fördern. Nachteilig ist allerdings, dass derartige Hartkunststoffleitungen nur eine geringe Flexibilität aufweisen und gerade für die Entstehung und/oder Weiterleitung von Geräuschen mitverantwortlich sein können. Demgegenüber führen flexible Leitungen zu einer Schwingungsdämpfung, weil eine flexible Leitung wie ein Druckspeicher wirkt. Aus diesem Grunde ist der Einsatz der Vorrichtung mit den zumindest zwei getrennten Kanälen zum Ausgleich von Druckschwankungen durch Interferenz gerade besonders effektiv, wenn Hartkunststoffleitungen als Bestandteil externer Leitungsabschnitte verwendet werden.

Leitungen aus Metall und insbesondere Leitungen aus Stahl oder Edelstahl sind außerdem auch hochtemperaturbeständig und können daher insbesondere zum Transport von Reduktionsmittel bis in unmittelbarer Nähe einer Abgasleitung und/oder zu einer Abgasbehandlungsvorrichtung verwendet werden.

Weiterhin vorteilhaft ist die Vorrichtung, wenn in der Nähe der Zugabeeinheit ein Drucksensor ausgebildet ist. Für die genaue Dosierung der von der Fördereinheit zugeführten Reduktionsmittelmenge ist es regelmäßig erforderlich, den Druck in unmittelbarer Umgebung der Zugabeeinheit genau zu kennen. Eine Zugabeeinheit steuert die zugeführte Menge an Reduktionsmittel normalerweise über die Öffnungszeit eines in der Zugabeeinheit angeordneten Injektors. Die zugeführte Menge an Reduktionsmittel wird dabei von der Öffnungszeit, der Bauform des Injektors und dem Druck in der Zugabeeinheit definiert. Aufgrund der häufig konstruktiv bedingten langen Strecke des externen Leitungsabschnittes kann es sein, dass der an der Zugabeeinheit tatsächlich vorliegende Druck mitunter erheblich von dem in der Fördereinheit vorliegenden Druck abweicht. Dies ist einerseits durch die Flexibilität des externen Leitungsabschnittes und dem darin auftretenden Strömungswiderstand bedingt. Andererseits bedingt die Laufzeit des Reduktionsmittels durch den externen Leitungsabschnitt, dass Druckschwankungen aus der Vorrichtung zeitversetzt zur Zugabeeinheit gelangen. Aus diesem Grunde ist es vorteilhaft, einen Drucksensor in unmittelbarer Nähe der Zugabeeinheit anzuordnen. Hier ist insbesondere mit geringeren seitens der pulsativ arbeitenden Förderpumpe erzeugten Druckschwankungen zu rechnen.

Darüber hinaus wird auch vorgeschlagen, dass die Vorrichtung ein Pulsationsdämpfungsbauteil aufweist, welches zwei Anschlüsse hat, über die es mit der Förderleitung verbindbar ist, und die zumindest zwei getrennten Kanäle innerhalb des Pulsationsdämpfungsbauteiles ausgebildet sind. Hiermit ist insbesondere gemeint, dass innerhalb der Vorrichtung ein separates Bauteil existiert, durch welches die Dämpfung erfolgt. Dieses Pulsationsdämpfungsbauteil kann auch nachträglich in Fördervorrichtungen eingebaut werden, indem die Förderleitung innerhalb der Vorrichtung bereichsweise getrennt und das Pulsationsdämpfungsbauteil in die getrennte Förderleitung eingesetzt wird.

Die zumindest zwei getrennten Kanäle weisen jeweils ein Einlassende und ein Auslassende auf und die zumindest zwei getrennten Kanäle sind durch eine Wandung voneinander getrennt, welche im Bereich des Auslassendes zumindest einen für Reduktionsmittel durchlässigen gemeinsamen Wandabschnitt aufweisen. Bei einer derartigen Anordnung sind im Bereich des Einlassendes vorzugsweise in zumindest einem der zumindest zwei getrennten Kanäle eine Leitungsverlängerung und/oder Mittel zur Strömungsbeschleunigung und/oder Mittel zur Strömungsabbremsung vorgesehen, durch welche die Interferenz zwischen den beiden Reduktionsmittelteilströmen in den zumindest zwei getrennten Kanälen erzeugt werden kann. Durch den für Reduktionsmittel durchlässigen gemeinsamen Wandabschnitt der beiden Kanäle im Bereich des Auslassendes findet bereits kurz vor dem Auslassende innerhalb der zumindest zwei getrennten Kanäle eine Angleichung der Strömungen und der Drücke in den zumindest zwei getrennten Kanälen statt. Es hat sich herausgestellt, dass eine derartige Angleichung der Druckströmungen in den zumindest zwei getrennten Kanälen eine besonders effiziente Verringerung der Pulsation in der Strömung ermöglicht. Der durchlässige gemeinsame Wandabschnitt ist also bevorzugt angrenzend zum gemeinsamen Sammelraum ausgebildet und umfasst bevorzugt eine beidseits von den Teilströmen kontaktierte Wand, die eine Vielzahl Öffnungen, Poren, Maschen oder dergleichen aufweist, die einen Austausch von Teilströmungen (entsprechend den jeweils aktuell herrschenden Druckniveaus in den Kanälen) ermöglicht.

Weiterhin erfindungsgemäß ist ein Kraftfahrzeug, aufweisend eine Verbrennungskraftmaschine und eine Abgasbehandlungsvorrichtung zur Reinigung der Abgase der Verbrennungskraftmaschine, wobei die Abgasbehandlungsvorrichtung eine Zugabeeinheit zur Zugabe von Reduktionsmittel in das Abgas aufweist, und die Zugabeeinheit von einer hier erfindungsgemäßen Vorrichtung mit Reduktionsmittel versorgt wird.

Insbesondere wird hier also folgendes Verfahren umgesetzt:
a) Fördern von flüssigem Reduktionsmittel mittels einer pulsativ arbeitenden Förderpumpe in eine Förderleitung, so dass Druckimpulse gebildet sind;
b) Ausbilden von mindestens zwei Teilströmungen des Reduktionsmittels;
c) Führen der mindestens zwei Teilströmungen des Reduktionsmittels mit unterschiedlicher Laufzeit zu einem Sammelpunkt;
d) Reduzieren der Druckimpulse durch Interferenz der Teilströmungen des Reduktionsmittels.

Das Verfahren kann insbesondere mit der hier beschriebenen erfindungsgemäßen Vorrichtung verwirklicht werden. Ebenso ist möglich, die im Zusammenhang mit der erfindungsgemäßen Vorrichtung erläuterten Verfahrensschritte hier anzuwenden bzw. zu ergänzen.

Die Erfindung sowie das technische Umfeld werden nachfolgend anhand der Figuren näher erläutert. Die Figuren zeigen besonders bevorzugte Ausführungsbeispiele, auf die die Erfindung jedoch nicht begrenzt ist. Insbesondere ist darauf hinzuweisen, dass die Figuren und insbesondere die dargestellten Größenverhältnisse nur schematisch sind. Es zeigen:
- Fig. 1:: eine Vorrichtung mit einem Tank und einer Zugabeeinheit,
- Fig. 2:: eine erste Ausführungsvariante eines Pulsationsdämpfungsbauteiles für die Vorrichtung,
- Fig. 3:: eine zweite Ausführungsvariante eines Pulsationsdämpfungsbauteiles für die Vorrichtung,
- Fig. 4:: ein schematisches Diagramm des Druckes in einer erfindungsgemäßen Vorrichtung, und
- Fig. 5:: ein Kraftfahrzeug, aufweisend eine Vorrichtung.

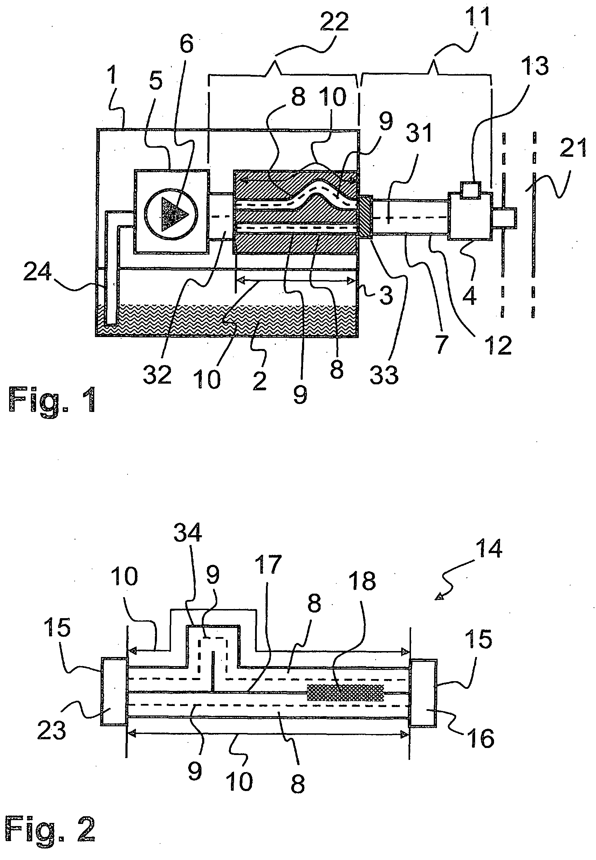

In Fig. 1 ist eine Vorrichtung 1 zusammen mit einem Tank 3 für flüssiges Reduktionsmittel 2 (hier eine Harnstoff-Wasser-Lösung) und mit einer Zugabeeinheit 4 (hier nach Art eines Injektors) zur Zugabe von flüssigem Reduktionsmittel in eine schematisch angedeutete Abgasbehandlungsvorrichtung 21 abgebildet. Die Vorrichtung 1 entnimmt Reduktionsmittel 2 aus dem Tank 3 über eine Entnahmeleitung 24. Das Reduktionsmittel 2 wird dann von einer Förderpumpe 5 mit einer Förderrichtung 6 in Richtung zur Zugabeeinheit 4 gefördert. In Förderrichtung 6 hinter der Förderpumpe 5 befindet sich zunächst ein Pumpenauslaufkanal 32. Dieser verzweigt in die getrennten Kanäle 8, welche getrennte Strömungswege 9 ausbilden. Einer der schematisch dargestellten zwei getrennten Kanäle 8 weist eine größere Länge 10 auf als der andere Kanal 8. Hierdurch wird eine (destruktive) Interferenz zwischen den Strömungen in den beiden Kanälen 8 erreicht. Anschließend münden die getrennten Kanäle 8 in einen gemeinsamen Sammelkanal 31. Von diesem aus gelangt gefördertes Reduktionsmittel 2 zu der Zugabeeinheit 4. Hier dargestellt ist auch ein an der Zugabeeinheit 4 angeordneter Drucksensor 13, mit welchem der Druck an der Zugabeeinheit 4 genau bestimmt werden kann. Die von den einzelnen Leitungsabschnitten (Pumpenauslaufkänal 32, getrennte Kanäle 8, Sammelkanal 31) gebildete Förderleitung 7 weist einen internen Leitungsabschnitt 22 auf, welcher innerhalb der Vorrichtung 1 (bzw. dessen Gehäuse und/oder Grundplatte) ausgebildet ist. Darüber hinaus weist die Förderleitung 7 einen externen Leitungsabschnitt 11 auf, der hier als Rohr 12 ausgeführt ist. Der externe Leitungsabschnitt 11 ist mit Hilfe eines Leitungsanschlusses 33 an die Vorrichtung 1 anschließbar.

Fig. 2 zeigt ein sich separates, einkoppelbares, Pulsationsdämpfungsbauteil 14, welches in eine Vorrichtung zur Förderung von Reduktionsmittel eingebaut werden kann, wodurch diese Vorrichtung Pulsationen in einer Reduktionsmittelströmung in der Fördervorrichtung durch Interferenz reduzieren oder sogar teilweise beseitigen kann. Das Pulsationsdämpfungsbauteil 14 weist zwei Anschlüsse 15 auf, über welche es in eine Förderleitung 7 einsetzbar ist. Einer der Anschlüsse 15 bildet ein Einlassende 23, der andere Anschluss 15 bildet ein Auslassende 16. Von dem Einlassende 23 zu dem Auslassende 16 verlaufen zumindest zwei getrennte Kanäle 8, die jeweils einen Strömungsweg 9 für Reduktionsmittel ausbilden. Die Strömungswege 9 weisen jeweils eine Länge 10 auf. Die Längen 10 der Strömungswege 9 sind verschieden. Dies wird gemäß der Ausführungsvariante in Fig. 2 durch eine Strömungsschleife 34 in einem der Kanäle 8 erreicht.

Die beiden Kanäle 8 sind durch eine Wandung 17 voneinander getrennt. Im Bereich des Auslassendes 16 weist die Wandung 17 einen durchlässigen Wandabschnitt 18 mit Poren bzw. Mikroöffnungen auf.

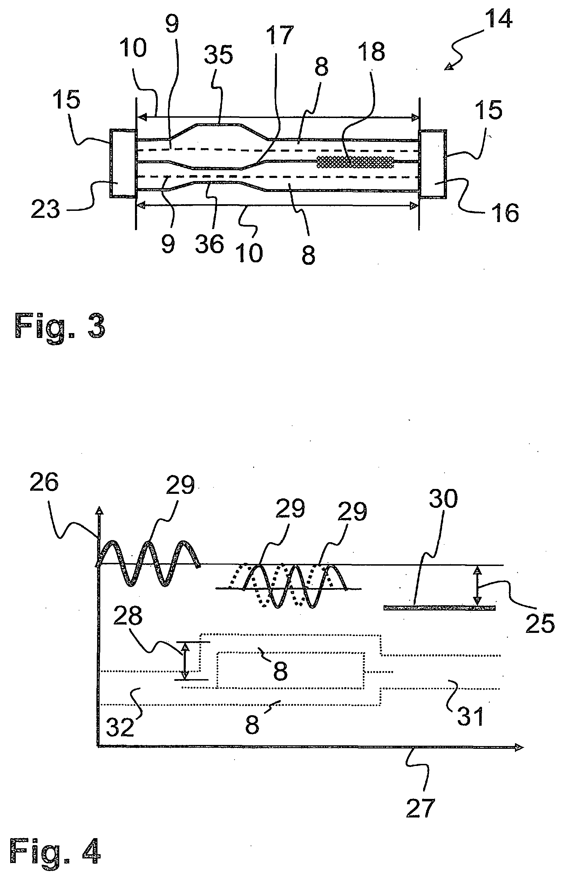

Fig. 3 zeigt eine weitere Ausführungsvariante eines Pulsationsdämpfungsbauteiles 14. Auch dieses Pulsationsdämpfungsbauteil 14 weist zwei Anschlüsse 15 auf, von denen der eine ein Auslassende 16 und der andere ein Einlassende 23 bildet. Vom Einlassende 23 zum Auslassende 16 erstrecken sich auch hier zwei getrennte Kanäle 8, die jeweils einen Strömungsweg 9 für Reduktionsmittel ausbilden. Die beiden Strömungswege 9 weisen jedoch gemäß der Fig. 3 gleiche Längen 10 auf. Eine Interferenz zwischen den Reduktionsmittelströmungen in den beiden getrennten Kanälen 8 wird hier dadurch erreicht, dass die Reduktionsmittelströmung in einem der beiden Kanäle 8 durch eine Querschnittserweiterung 35 abgebremst wird, während sie in dem anderen Kanal 8 durch eine Querschnittsverengung 36 beschleunigt wird. Diese Abbremsung bzw. Beschleunigung der Reduktionsmittelströmung findet nur bereichsweise und für die Teilströmungen getrennt statt.

Auch gemäß Fig. 3 ist dargestellt, dass die Kanäle 8 durch (mindestens) eine Wandung 17 voneinander getrennt sind, wobei die Wandung 17 im Bereich des Auslassendes 16 einen durchlässigen Wandabschnitt 18 aufweist, durch welchen ein Ausgleich von den Reduktionsmittelströmungen in den getrennten Kanälen 8 erfolgen kann.

Fig. 4 zeigt schematisch den Druckverlauf in der Förderleitung einer Variante der erfindungsgemäßen Vorrichtung 1. Der Druck in der Förderleitung ist auf der Druckachse 26 über die Positionsachse 27 aufgetragen. Im unteren Bereich der Fig. 4 ist schematisch die Förderleitung 7 mit dem Pumpenauslasskanal 32, den getrennten Kanälen 8 und dem Sammelkanal 31 dargestellt. Zwischen den beiden getrennten Kanälen 8 existiert eine Längendifferenz 28. Im Bereich des Pumpenauslaufkanals 32 ist in dem Diagramm der Pumpendruckpuls 29 zu erkennen. Im Bereich der getrennten Kanäle wird durch die Längendifferenz 28 der Druckpuls 29 in zwei einzelne Pumpendruckpulse 29 unterteilt, die eine Interferenz zueinander aufweisen. Wenn die Teilströme aus den beiden getrennten Kanälen 8 im Sammelkanal 31 wieder zusammengeführt sind, existiert nur noch eine Reduktionsmittelströmung mit einem im Wesentlichen ausgeglichenem Druck 30 (wie gezeigt) oder zumindest mit einer geringeren Druckamplitude. Aufgrund von Reibungen innerhalb der Vorrichtung 1 fällt das mittlere Druckniveau ausgehend von dem Pumpenauslaufkanal 32 über die getrennten Kanäle 8 zu dem Sammelkanal 31 um einen Druckverlust 25 ab.

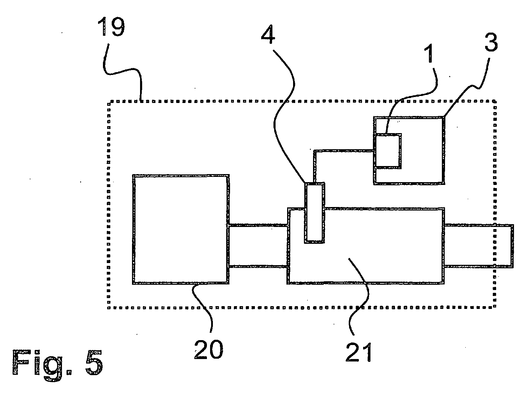

Fig. 5 zeigt ein Kraftfahrzeug 19, aufweisend eine Verbrennungskraftmaschine 20 und eine Abgasbehandlungsvorrichtung 21 zur Reinigung der Abgase der Verbrennungskraftmaschine 20. Die Abgasbehandlungsvorrichtung 21 weist eine Zugabeeinheit 4 zur Zufuhr von Reduktionsmittel in die Abgasbehandlungsvorrichtung 21 auf. Die Zugabeeinheit 4 kann beispielsweise einen Injektor aufweisen. Die Zugabeeinheit 4 wird von einer erfindungsgemäßen Vorrichtung 1 mit Reduktionsmittel aus einem Tank 3 versorgt.

Die hier beschriebene Vorrichtung löst die im Zusammenhang mit dem Stand der Technik geschilderten technischen Probleme zumindest teilweise. Insbesondere erlaubt die Vorrichtung eine besonders kostengünstige, geräuscharme und/oder dosiergenaue Förderung von Reduktionsmittel. Dabei ist insbesondere eine von dem Pumpenmodell relativ unabhängige Lösung zur Reduzierung von Geräuschen über die Förderleitungen des Reduktionsmittels angegeben, die also für eine Mehrzahl verschiedener Pumpenmodelle gleichermaßen einfach und kostengünstig angewendet werden kann.

### Bezugszeichenliste

- 1: Vorrichtung
- 2: Reduktionsmittel
- 3: Tank
- 4: Zugabeeinheit
- 5: Förderpumpe
- 6: Förderrichtung
- 7: Förderleitung
- 8: Kanal
- 9: Strömungsweg
- 10: Länge
- 11: externer Leitungsabschnitt
- 12: Rohr
- 13: Drucksensor
- 14: Pulsationsdämpfungsbauteil
- 15: Anschluss
- 16: Auslassende
- 17: Wandung
- 18: durchlässiger Wandabschnitt
- 19: Kraftfahrzeug
- 20: Verbrennungskraftmaschine
- 21: Abgasbehandlungsvorrichtung
- 22: interner Leitungsabschnitt
- 23: Einlassende
- 24: Entnahmeleitung
- 25: Druckverlust
- 26: Druckachse
- 27: Positionsachse
- 28: Längendifferenz
- 29: Pumpendruckpuls
- 30: ausgeglichener Druck
- 31: Sammelkanal
- 32: Pumpenauslaufkanal
- 33: Leitungsanschluss
- 34: Strömungsschleife
- 35: Querschnittserweiterung
- 36: Querschnittsverengung

## Patentansprüche

1. Vorrichtung (1) zur Förderung von Reduktionsmittel (2) aus einem Tank (3) zu einer Zugabeeinheit (4), aufweisend eine pulsativ arbeitende Förderpumpe (5) zur Förderung von Reduktionsmittel (2) mit einer Förderrichtung (6) durch eine Förderleitung (7) von dem Tank (3) zu der Zugabeeinheit (4), wobei die Förderleitung (7) in Förderrichtung (6) hinter der Förderpumpe (5) bereichsweise zumindest zwei getrennte Kanäle (8) aufweist und die Kanäle (8) Strömungswege (9) mit verschiedenen Laufzeiten für das Reduktionsmittel (2) ausbilden, **dadurch gekennzeichnet dass** die zumindest zwei getrennten Kanäle (8) jeweils ein Einlassende (23) und ein Auslassende (16) aufweisen, und die zumindest zwei getrennten Kanäle (8) durch eine Wandung (17) voneinander getrennt sind, welche im Bereich der Auslassenden (16) zumindest einen für Reduktionsmittel durchlässigen gemeinsamen Wandabschnitt (18) aufweisen.

2. Vorrichtung (1) nach Patentanspruch 1, wobei in Förderrichtung (6) nach der Förderpumpe (5) und vor den zumindest zwei getrennten Kanälen (8) ein gemeinsamer Pumpenauslaufkanal (32) existiert, aus dem die zumindest zwei getrennten Kanäle (8) abzweigen, und in Förderrichtung (6) hinter den zumindest zwei getrennten Kanälen (8) und vor der Zugabeeinheit (4) ein gemeinsamer Sammelkanal (31) existiert, in welchen die zumindest zwei getrennten Kanäle (8) münden.

3. Vorrichtung (1) nach einem der vorhergehenden Patentansprüche, wobei die zumindest zwei Kanäle (8) so geschaltet sind, dass die verschiedenen Laufzeiten der Strömungswege (9) dazu geeignet sind, von der Förderpumpe (5) erzeugte Druckschwankungen zumindest teilweise durch Interferenz auszugleichen.

4. Vorrichtung (1) nach einem der vorhergehenden Patentansprüche, wobei die zumindest zwei getrennten Kanäle (8) Strömungswege (9) mit verschiedenen Längen (10) ausbilden.

5. Vorrichtung (1) nach einem der vorhergehenden Patentansprüche, wobei die Förderleitung (7) von einem internen Leitungsabschnitt (22) in der Vorrichtung (1) und von einem externen Leitungsabschnitt (11) außerhalb der Vorrichtung (1) gebildet ist, und die zumindest zwei getrennten Kanäle (8) Bestandteil des internen Leitungsabschnittes (22) sind.

6. Vorrichtung (1) nach einem der vorhergehenden Patentansprüche, wobei die Förderleitung (7) von einem internen Leitungsabschnitt (22) in der Vorrichtung (1) und von einem externen Leitungsabschnitt (11) außerhalb der Vorrichtung (1) gebildet ist und der externe Leitungsabschnitt (11) zumindest teilweise von einem Rohr (12) aus Hartkunststoff oder Metall gebildet ist.

7. Vorrichtung (1) nach einem der vorhergehenden Patentansprüche, wobei in der Nähe der Zugabeeinheit (4) ein Drucksensor (13) ausgebildet ist.

8. Vorrichtung (1) nach einem der vorhergehenden Patentansprüche, wobei die Vorrichtung (1) ein Pulsationsdämpfungsbauteil (14) aufweist, welches zwei Anschlüsse (15) hat, über die es mit der Förderleitung (7) verbindbar ist, und die zumindest zwei getrennten Kanäle (8) innerhalb des Pulsationsdämpfungsbauteiles (14) ausgebildet sind.

9. Kraftfahrzeug (19), aufweisend eine Verbrennungskraftmaschine (20) und eine Abgasbehandlungsvorrichtung (21) zur Reinigung der Abgase der Verbrennungskraftmaschine (20), wobei die Abgasbehandlungsvorrichtung (21) eine Zugabeeinheit (4) zur Zugabe von Reduktionsmittel (2) in das Abgas aufweist, und die Zugabeeinheit (4) von einer Vorrichtung (1) gemäß einem der vorhergehenden Patentansprüche mit Reduktionsmittel (2) versorgt wird.

## Claims

1. Device (1) for delivering reducing agent (2) from a tank (3) to a metering unit (4), having a pulsatingly acting delivery pump (5) for delivering reducing agent (2) in a delivery direction (6) through a delivery line (7) from the tank (3) to the metering unit (4), wherein the delivery line (7) has, in regions downstream of the delivery pump (5) in the delivery direction (6), at least two separate ducts (8), and the ducts (8) form flow paths (9) which exhibit different propagation times for the reducing agent (2), **characterized in that** the at least two separate ducts (8) have in each case one inlet end (23) and one outlet end (16), and the at least two separate ducts (8) are separated from one another by a wall (17) which, in the region of the outlet ends (16), has at least one common wall portion (18) which is permeable to reducing agent.

2. Device (1) according to Patent Claim 1, wherein downstream of the delivery pump (5) and upstream of the at least two separate ducts (8) in the delivery direction (6), there is a common pump outflow duct (32) from which the at least two separate ducts (8) branch off, and downstream of the at least two separate ducts (8) and upstream of the metering unit (4) in the delivery direction (6), there is a common collecting duct (31) into which the at least two separate ducts (8) issue.

3. Device (1) according to one of the preceding patent claims, wherein the at least two ducts (8) are connected such that the different propagation times of the flow paths (9) are suitable for at least partially leveling out, through interference, pressure fluctuations generated by the delivery pump (5).

4. Device (1) according to one of the preceding patent claims, wherein the at least two separate ducts (8) form flow paths (9) of different lengths (10).

5. Device (1) according to one of the preceding patent claims, wherein the delivery line (7) is formed by an internal line portion (22) in the device (1) and by an external line portion (11) outside the device (1), and the at least two separate ducts (8) are a constituent part of the internal line portion (22).

6. Device (1) according to one of the preceding patent claims, wherein the delivery line (7) is formed by an internal line portion (22) in the device (1) and by an external line portion (11) outside the device (1), and the external line portion (11) is formed at least partially by a tube (12) composed of hard plastic or metal.

7. Device (1) according to one of the preceding patent claims, wherein a pressure sensor (13) is formed in the vicinity of the metering unit (4).

8. Device (1) according to one of the preceding patent claims, wherein the device (1) has a pulsation-damping component (14) which has two connections (15) by means of which it can be connected to the delivery line (7), and the at least two separate ducts (8) are formed within the pulsation-damping component (14).

9. Motor vehicle (19) having an internal combustion engine (20) and an exhaust-gas treatment device (21) for the purification of the exhaust gases of the internal combustion engine (20), wherein the exhaust-gas treatment device (21) has a metering unit (4) for metering reducing agent (2) into the exhaust gas, and the metering unit (4) is supplied with reducing agent (2) by a device (1) according to one of the preceding patent claims.

## Revendications

1. Dispositif (1) d'acheminement d'agent (2) réducteur d'un réservoir (3) à une unité (4) d'addition, ayant une pompe (5) d'alimentation travaillant de manière pulsée pour l'acheminement de l'agent (2) réducteur dans un sens (6) d'acheminement par un conduit (7) d'acheminement du réservoir (3) à l'unité (4) d'addition, le conduit (7) d'acheminement ayant, dans le sens (6) d'acheminement derrière la pompe (5) d'alimentation, par endroit, au moins deux canaux (8) distincts et les canaux formant des voies (9) d'écoulement à temps de parcours différents de l'agent (2) réducteur, **caractérisé en ce que** les au moins deux canaux (8) distincts ont respectivement une extrémité (23) d'entrée et une extrémité (16) de sortie et les au moins deux canaux (8) distincts sont séparés l'un de l'autre par une paroi (17), qui a, dans la zone des extrémités (16) de sortie, au moins une partie (18) de paroi commune perméable à l'agent réducteur.

2. Dispositif (1) suivant la revendication 1, dans lequel, dans le sens (6) d'acheminement, après la pompe (5) d'alimentation et avant les au moins deux canaux (8) distincts, existe un canal (32) commun de refoulement de la pompe, dont bifurquent les au moins deux canaux (8) distincts, et, dans le sens (6) de cheminement, derrière les au moins deux canaux (8) distincts et avant l'unité (4) d'addition, existe un canal (31) collecteur commun, dans lequel débouchent les au moins deux canaux (8) distincts.

3. Dispositif (1) suivant l'une des revendications précédentes, dans lequel les au moins deux canaux (8) sont branchés, de manière à ce que les temps de parcours différents des voies (9) d'écoulement soient appropriés à compenser, au moins en partie par interférence, des fluctuations de pression produites par la pompe (5) d'alimentation.

4. Dispositif (1) suivant l'une des revendications précédentes, dans lequel les au moins deux canaux (8) distincts forment des voies (9) d'écoulement de longueurs (10) différentes.

5. Dispositif (1) suivant l'une des revendications précédentes, dans lequel le conduit (7) d'acheminement est formé d'un tronçon (22) interne de conduit dans le dispositif (1) et d'un tronçon (11) externe de conduit à l'extérieur du dispositif (1) et les au moins deux canaux (8) distincts font partie du tronçon (22) interne de conduite.

6. Dispositif (1) suivant l'une des revendications précédentes, dans lequel le conduit (7) d'alimentation est formé d'un tronçon (22) interne de conduit dans le dispositif (1) et d'un tronçon (11) externe de conduit à l'extérieur du dispositif (1) et le tronçon (11) externe de conduit est formé, au moins en partie, par un tuyau (12) en matière plastique dure ou en métal.

7. Dispositif (1) suivant l'une des revendications précédentes, dans lequel un capteur (13) de pression est constitué à proximité de l'unité (4) d'addition.

8. Dispositif (1) suivant l'une des revendications précédentes, dans lequel le dispositif (1) a un module (14) d'amortissement des pulsations, qui a deux raccords (15), par lesquels il peut communiquer avec le conduit (7) d'alimentation, et les au moins deux canaux (8) distincts sont constitués à l'intérieur du module (14) d'amortissement des pulsations.

9. Véhicule (19) automobile ayant un moteur (20) à combustion interne et un dispositif (21) de traitement des gaz d'échappement pour épurer les gaz d'échappement du moteur (20) à combustion interne, le dispositif (21) de traitement des gaz d'échappement ayant une unité (4) d'addition d'agent (2) réducteur dans les gaz d'échappement et l'unité (4) d'addition étant alimenté en agent (2) réducteur par un dispositif (1) suivant l'une des revendications précédentes.
